# EUROPEAN PATENT APPLICATION

(11) **EP 4 503 613 A1**
(43) Date of publication of application: **05.02.2025**
(21) Application number: 24190216.2
(22) Date of filing: 23.07.2024
(51) Int. Cl.: H04N 19/85, G06N 3/045, G06N 3/084

(54) **DEVICES, SYSTEMS, CODECS AND METHODS FOR NEURAL CODING**

(30) Priority: 03.08.2023 GB 202311926
(71) Applicant: Sony Interactive Entertainment Inc., Tokyo 108-0075 (JP)
(72) Inventor: BIGOS, Andrew James, London, W1F 7LP (GB); CURRIUS, Roc Ramon, Tokyo, 108-0075 (JP)
(74) Representative: D Young & Co LLP

(57) **Abstract**

A hybrid codec for training a neural coding system, the hybrid codec comprising: a real codec for encoding data pre-processed by a first neural network, and for decoding the encoded data for post-processing by a second neural network; and a proxy codec that is a differentiable representation of the real codec, and is for back-propagating a loss function, representative of a coding bit-rate and a coding distortion between the post-processed data and the original data, for training the weights of at least the first neural network.

## Description

### Field of Invention

The present invention relates to devices, systems, codecs and methods for neural coding.

### Background

Neural networks may be independently used to pre-process and/or post-process data for streaming to improve the efficiency or quality of streaming data/content. For example, a post-process neural network can be trained to remove compression or streaming artefacts, and/or perform operations like super-resolution imaging to increase an output resolution of streamed content.

Meanwhile, a pre-process neural network can, for example, be used to remove higher frequencies from data/content prior to the data/content being encoded, which may enable more efficient encoding with less compression artefacts.

However, these pre-processes and post-processes are independent of one another and can therefore be enabled/disabled independently. If the pre-process neural network and post-process neural network are trained together, the pre-process neural network and post-process neural network may be more effective, and may, in some cases, be able to convert data from a type not supported by an encoder/decoder into a data type that is supported by the encoder/decoder using the pre-process neural network and reconstruct the data after encoding/decoding into the type not supported by the encoder/decoder by using the post-process neural network.

It is in this context that the present disclosure arises.

### Summary of the Invention

In a first aspect, a hybrid codec is provided in claim 1.

In another aspect, a neural coding system for streaming is provided in claim 2.

In another aspect, a method for streaming using neural coding is provided in claim 11.

In another aspect, a method for training a neural network for neural coding is provided in claim 12.

Further respective aspects and features of the invention are defined in the appended claims.

Embodiments of the present invention will now be described by way of example with reference to the accompanying drawings, in which:
- Figure 1 schematically illustrates an example neural coding system;
- Figure 2 schematically illustrates another example neural coding system;
- Figure 3 schematically illustrates an example method for streaming using neural coding;
- Figure 4 schematically illustrates an example method for training a neural network;
- Figure 5 schematically illustrates an example management device for a neural coding streaming system;
- Figure 6 schematically illustrates an example neural coding transmission device 600 for streaming transmission;
- Figure 7 schematically illustrates an example neural coding reception device 700 for receiving streamed data; and
- Figure 8 schematically illustrates an example method 800 for managing a neural coding system.

### Description of the Embodiments

In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

For streaming data (such as video content, audio content, and/or video game content), a codec (such as HEVC, JPEG, FLAC, H.264, etc.) is typically used by a encoder/decoder to encode/decode the streaming data for transmission. Neural coding is a technique that may improve the streaming of the data by using neural networks (NN) to optimise the streaming of the data. In some cases, neural networks can be trained to perform the entire coding process. However, since many frequently used coding schemes are implemented in hardware circuitry, it can be more efficient to use NNs to pre-process and post-process data that is coded using a standard codec. For example, the input to an encoder may be processed by a pre-process neural network and the output of a decoder may be processed by a post-process neural network.

Additionally, the pre-process NN and the post-process NN may be more effective in a case where they are trained together in comparison to a case where they are trained independently of one another since the pre-process NN and post-process NN can learn to pass additional information inside the encoded information from the pre-process NN to the post-process NN and this learnt information can allow more effective encoding/decoding, and may enable a information that is typically in a format not supported by a given codec to be coded by that codec.

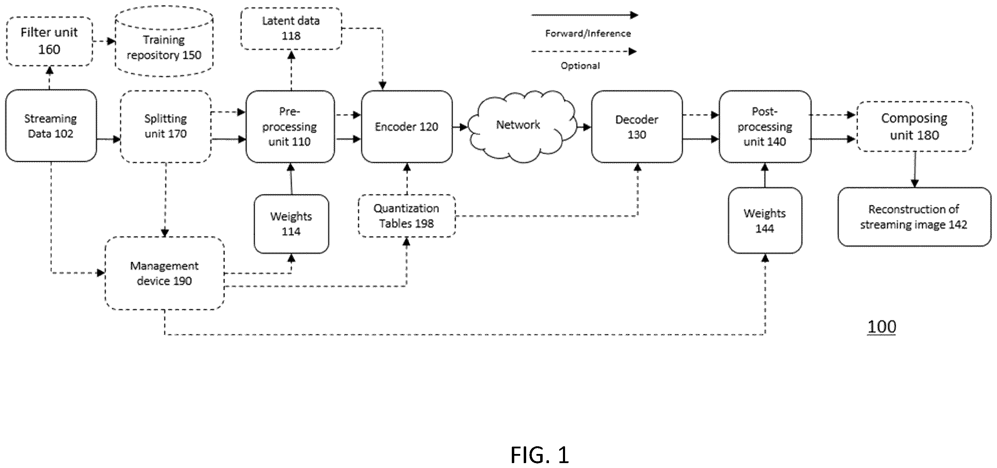

Referring now to Figure 1, an example of a neural coding system 100 for streaming according to embodiments of the present disclosure is shown. In this example, streaming data 102 is the data to be streamed by the neural coding system 100. The streaming data 102 may be one or more of video data, audio data, video game data, and/or any other type of data suitable for streaming.

The basic operation of the neural coding system 100 shown in figure 1 will now be described. The streaming data 102 is input into the pre-processing unit 110 that is configured to pre-process, using a first neural network trained to pre-process streaming data, the streaming data 102 to obtain pre-processed data. The pre-processed data is in a data format that is supported by the codec that is used by the encoder 120 and decoder 130.

The pre-processed data is input into the encoder 120, which is configured to encode the pre-processed data using/according to a codec. The codec used by the encoder 120 may be predetermined or may be selected by a user of the streaming system for example. It should be noted that the techniques of the present disclosure are suitable for use with either a lossy or a lossless codec.

The encoded pre-processed data may then be streamed via a network to a decoder 130. The decoder 130 is configured to decode, using/according to a codec (which may be the same as, or complementary to, the codec used by the encoder 120), the encoded pre-processed data to obtain decoded pre-processed data. It should be noted that the decoded pre-processed data may not be the same as the pre-processed data prior to encoding (for example, in a case where a lossy coding scheme is used). However, in some cases (such as when a lossless coding scheme is used), the decoded pre-processed data may be the same as the pre-processed data prior to encoding.

The decoded pre-processed data may be input to the post-processing unit 140, which is configured to post-process the decoded pre-processed data, using a second neural network trained to post-process the decoded pre-processed data, to obtain a reconstruction of the streaming data 142. The reconstruction of the streaming data 142 may then be output by an appropriate output device (e.g. a display screen, head mounted display, audio output system, etc.).

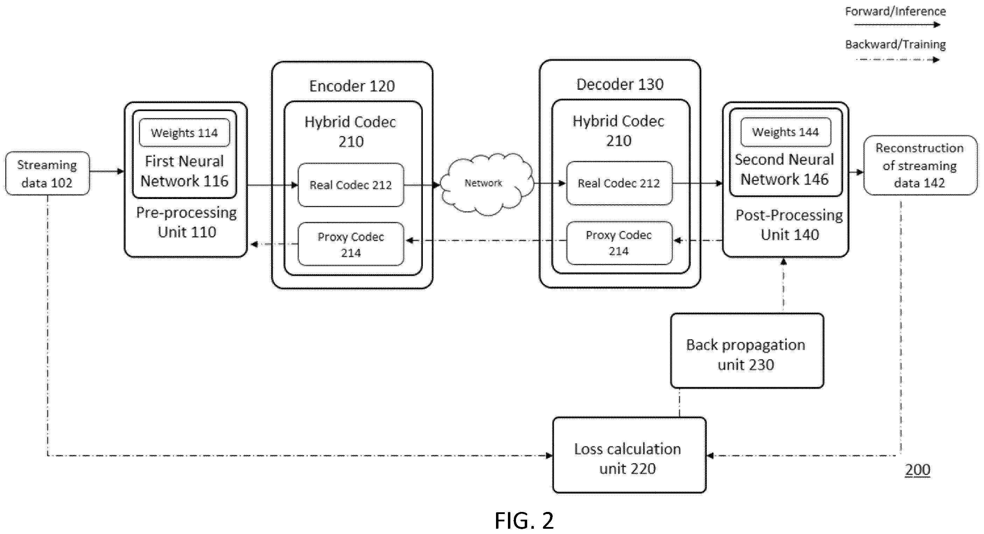

Figure 2 illustrates another example of a neural coding system 200 for streaming. It should be noted that features that have already have been discussed with respect to figure 1 share reference numerals with features illustrated in figure 2, and repeated discussion of these features will be omitted.

In this example, the encoder 120 and decoder 130 use a hybrid codec 210 for encoding/decoding. The hybrid codec 210 comprises a real codec 212 (i.e. any standard codec that may be used for encoding/decoding as discussed elsewhere herein); and a proxy codec 214.

A reconstruction of the streaming data 142 that has been encoded and then decoded using the real codec 212 cannot be back-propagated to further train the neural networks 116, 146 by using the real codec 212 since the real codec 212 is not differentiable (i.e. derivatives cannot be propagated using the real codec 212), which is essential for the back-propagation.

Therefore, in some embodiments of the present disclosure, a proxy codec 214 is provided. The proxy codec 214 is a differentiable model of the real codec 212. In particular, the proxy codec 214 is representative of a coding bit-rate of the real codec 212 (i.e. the compression rate) and a coding distortion of the real codec 212.

The coding distortion can be modelled by replacing any non-differentiable steps of the real codec 212 with differentiable mathematical approximations of the non-differentiable steps. For example, for the JPEG codec, the quantization step is not differentiable because it includes a non-differentiable rounding function. However, this rounding function may be replaced by using a differentiable mathematical approximation such as a polynomial approximation, a Fourier series, a Taylor series, etc. Therefore, a modified JPEG codec where the rounding function of the quantization step has been replaced by differential mathematical approximation of the rounding function is an example of a proxy codec that models a coding distortion of a real codec 212 (in this example, the JPEG codec).

The proxy codec 214 of the present disclosure is also representative of the coding bit-rate of the real codec 212. The proxy codec 214 may model the coding bit-rate of the real codec 212 by using differentiable mathematical approximation techniques as discussed above for example. As another example, the proxy codec 214 may model the coding bit-rate of the real codec 212 by using a machine learning model trained to predict the coding bit-rate of the real codec 212.

Therefore, in embodiments of the present disclosure, a hybrid codec 210 for training a neural coding system 100, 200 is provided. The hybrid codec 210 comprises a real codec 212 for encoding data pre-processed by a first neural network 116, and for decoding the encoded data for post-processing by a second neural network 146; and a proxy codec 214 that is a differentiable representation of the real codec 212, and is for back-propagating a loss function, the proxy codec 214 is representative of a coding bit-rate of the real codec 212 and a coding distortion of the real codec 212 (i.e. the difference between the pre-processed data and the decoded pre-processed data), for training the weights 114 of at least the first neural network 116.

Therefore, the hybrid codec 210 is provided for use with a neural coding system 100, 200 where a real codec 212 may be used in a forward pass in training and in runtime inference and a proxy codec 214 may be used only in a backward pass. Therefore, using the hybrid codec 210 of the present disclosure may advantageously improve the reliability of the training of the neural networks because the loss function that the neural networks are trained on is based on the reconstruction of streaming data from coding using the real codec 212, which may remove a potential source of errors.

Additionally, because the differentiability is achieved in the backward pass due to the use of the proxy codec 214, derivatives of the loss function can be back-propagated using the proxy codec 214, which may advantageously avoid any issues that may be caused by differences between the proxy codec 214 and the real codec 212 in comparison to a case where a proxy codec is also used in the forward pass in training and a real codec is only used during runtime inference.

Additionally, in embodiments of the present disclosure, a neural coding system 100, 200 for streaming is provided. The neural coding system 100, 200 comprises a pre-processing unit 110 configured to pre-process streaming data 102 to obtain pre-processed data using a first neural network 116 trained to pre-process streaming data; the hybrid codec 210 as described elsewhere herein; an encoding unit 120 configured to encode, using the real codec 212, the pre-processed data; a decoding unit 130 configured to decode, using the real codec 212, the encoded pre-processed data; and a post-processing unit 140 configured to post-process the decoded pre-processed data to obtain a reconstruction of the streaming data using a second neural network 146 trained to post-process the decoded pre-processed data.

In some embodiments of the present disclosure, the neural coding system 100, 200 may comprise a loss calculation unit 220 configured to calculate a loss function representative of a coding bit-rate for the streaming data 102 and a coding distortion between the streaming data 102 and the reconstruction of the streaming data 142; and a backpropagation unit 230 configured to further train the weights 114 of the first neural network 116 by back-propagating the loss function using the proxy codec 214 that is a differentiable representation of the real codec 212.

The backpropagation unit 230 may use any suitable backpropagation technique, such as gradient descent. Because the proxy codec 214 is differentiable, derivatives of the loss function calculated using the reconstruction of the streaming data 142 may be back-propagated by using the proxy codec 214.

In some embodiments of the present disclosure, the backpropagation unit 230 may be configured to further train the weights 144 of the second neural network 146 by back-propagating the loss function via the second neural network 146 prior to the backpropagation of the loss function using the proxy codec 214. The backpropagation unit 230 may be configured to further train the weights 144 of the second neural network 146 by back-propagating the loss function in a similar manner to the further training of the first neural network as described elsewhere herein.

Returning to figure 1, in some embodiments of the present disclosure, the neural coding system 100, 200 may comprise a training repository unit 150 configured to store the streaming data 102 for further training the first neural network 116 and the second neural network 146.

Optionally, in these embodiments of the present disclosure, the training repository unit 150 may be configured to store the reconstruction of the streaming data 142 in association with the streaming data 102 for further training the first neural network 116 and the second neural network 146.

The training repository unit 150 may advantageously enable a larger training data set to be generated since the neural coding system 100, 200 may use data from runtime inference (rather than just in a training stage) for training because of the use of the hybrid codec 210.

Further optionally, in these embodiments of the present disclosure, the backpropagation unit 230 may be configured to further train the weights 114, 144 when a utilisation level of the neural coding system 100, 200 is below a predetermined threshold. For example, if the neural coding system 100, 200 is implemented in a video game streaming system, the backpropagation unit 230 may further train the weights 114, 144 when the utilisation of the video game streaming system is below a predetermined threshold such as during off-peak times. Therefore, the neural coding system 100, 200 may advantageously perform further training by utilising existing hardware without impacting the performance of the use of the neural coding system 100, 200.

Optionally, in the embodiments of the present disclosure where the neural coding system 100, 200 comprises the training repository unit 150, the neural coding system 100, 200 may comprise a filter unit 160 configured to filter the data 102, 142 to be stored in the training repository unit 150 using a third neural network trained to identify the data most likely to improve the first neural network 116 and the second neural network 146 when further trained.

In some cases, the first neural network 116 may be trained to output, to the filter unit 160, a signal in response to the first neural network 116 determining that the data to be streamed 102 may be outside the scope of the weights used by the first neural network 116. In these cases, the third neural network may use the signal as a further input to evaluate whether the data 102, 142 should be stored in the training repository 150. Alternatively, the filter unit 160 may bypass the third neural network and store the data 102, 142 in the training repository 150 in response to receiving the signal from the first neural network 116.

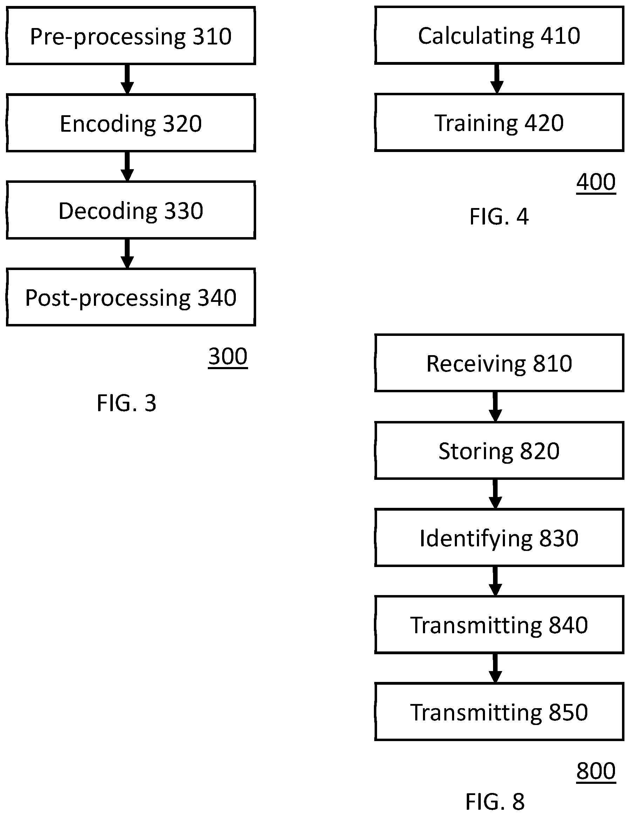

Referring now to figure 3, in some embodiments of the present disclosure, a method 300 for streaming using neural coding with the hybrid codec 210 is provided. The method comprises the steps of pre-processing 310 streaming data to obtain pre-processed data using a first neural network trained to pre-process the streaming data; encoding 320, using the real codec 212, the pre-processed data; decoding 330, using the real codec 212, the encoded pre-processed data; and post-processing 340 the decoded pre-processed data to obtain a reconstruction of the streaming data using a second neural network trained to post-process the decoded pre-processed data.

Referring now to figure 4, in some embodiments of the present disclosure, a method 400 for training the first neural network according to the method 300 for streaming is provided. The method 400 for training comprising the steps of: calculating 410 a loss function representative of a coding bit-rate for streaming data coded in accordance with the method 300 for streaming and a coding distortion between the streaming data and the reconstruction of the streaming data obtained in accordance with the method 300 for streaming; and further training 420 the weights of the first neural network by back-propagating the loss function using the proxy codec 214.

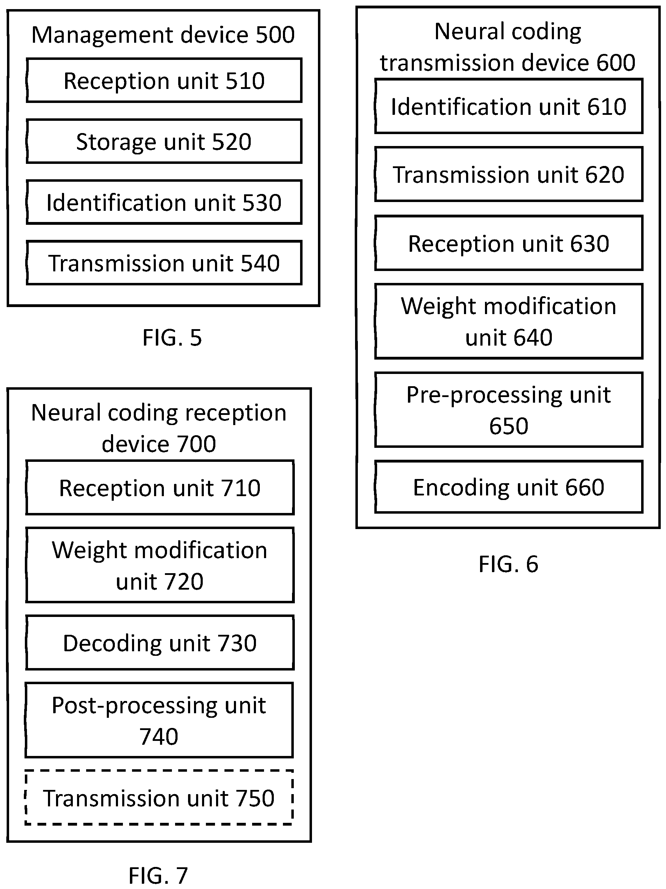

Referring now to figure 5, in some embodiments of the present disclosure, a management device 500 for a neural coding streaming system (such as the neural coding streaming system 100 or 200) is provided. The management device 500 comprises a reception unit 510; a storage unit 520; an identification unit 530; and a transmission unit 540.

Before explaining the components of the management device 500 in more detail, it should be noted that a management device 500 of the present disclosure may be used with, but is not limited to being used with, a neural coding system using a hybrid codec 210 as described elsewhere herein.

The reception unit 510 is configured to receive one or more tags indicative of a type of streaming data to be streamed by the neural coding system. For example, the tags may be indicative of a type of data to be streamed such as audio data, video data or video game data. The tags may additionally, or alternatively, be indicative of the content to be streamed. For example, in the case of audio data, the tags may be indicative of a genre of music, that the audio data is dialogue, or a particular artist of music, a particular song or portion of a song, and/or any other suitable indication of the content of audio data. As a further example, in the case of the data to be streamed being video game data, the tags may be indicative of a specific game, a specific portion of a video game, or any other suitable indication of the content of video game data. In some cases, one or more tags may be received for each buffer of data to be streamed by the neural coding system.

It should be noted that the data to be streamed may, in some cases, be a combination of different types of data, each of which may be indicated by one or more tags. For example, video game data may be streamed alongside audio data.

The storage unit 520 is configured to store a plurality of sets of weights for neural networks of the neural coding system. A respective set of weights is associated with at least one tag indicative of a type of streaming data.

The identification unit 530 is configured to identify, from the storage unit 520, a set of weights in dependence upon the received tags. For example, if the reception unit 510 receives a set of tags 'A', 'B', 'C' and 'D' indicative of a type of streaming data to be streamed by the neural coding system, and the storage unit 520 has a set of weights stored associated with the tags 'A', 'B', 'C' and 'D', the identification unit 530 may identify that set of weights. It should be noted that 'A', 'B', 'C' and 'D' have just been given as labels for the sake of this, and later, examples and should not be construed as limiting on the format or content of the tags disclosed herein.

However, an exact match is not required. For example, if there is no exact match, the identification unit 530 may identify a set of weights stored in the storage unit 520 that is associated with the most tags in common with the received tags. For example, with reference to the received tags in the above example, if the storage unit 520 stores a first set of weights associated with the tags 'A' and 'B', and a second set of weights associated with the tags 'B', 'C' and 'D', the identification unit 530 may identify the second set of weights since it the set of weights that is associated with the most tags in common with the received tags.

Furthermore, some tags may be given a higher priority over other tags. For example, the tag 'A' may have a higher priority than the other tags. In that case, referring to the example in the preceding paragraph, the identification unit 530 may identify the first set of weights based on the received tags even though the second set of tags has more tags in common with the received tags because the first set of weights is (and the second set is not) associated with the 'A' tag having a higher priority than the other tags.

In some cases, such as when there is only a limited, or even no, match, the identification unit 530 may identify a default set of weights. There may be more than one default set of weights, and a particular default set may be selected in dependence upon one or more of the received tags in a manner similar to that described above.

The transmission unit 540 is configured to transmit, to the neural coding system, for a first neural network of the neural coding system, first weight data representative of a portion of the identified set of weights. The transmission unit 540 is also configured to transmit, to the neural coding system, for a second neural network of the neural coding system, second weight data representative of another portion of the identified set of weights.

The management device 500 of the present disclosure may advantageously enable more efficient streaming that can be tailored for given streaming data whilst still taking advantage of highly efficient codecs, which are commonly implemented via specific hardware circuitry, since the tailoring is performed by the particular weights for the neural networks transmitted by the management device 500.

In some cases, at least one of the set of weights stored by the storage unit 520 may have been generated by training a first neural network and a second neural network independently of one another as described elsewhere herein. Therefore, the first portion of an identified set of weights represented by the first weight data and the second portion of the identified set of weights represented by the second weight data may have been generated by training a first neural network and a second neural network independently of one another.

In this case, at least one of the tags may indicate that the streaming data should be streamed using a pre-process network and a post-process network that have been trained independently of one another. Alternatively, or in addition, when there is a limited, or even no, match between the received tags and the tags associated with the sets of weights stored by the storage unit 520 as described elsewhere herein, one of the default set of weights described elsewhere herein may be a set of weights comprising a first portion of weights and a second portion of weights that are generated by training a first neural network and a second neural network independently of one another.

Alternatively, or in addition, at least one of the set of weights stored by the storage unit 520 may have been generated by training a first neural network and a second neural network together as described elsewhere herein. Therefore, the first portion of an identified set of weights represented by the first weight data and the second portion of the identified set of weights represented by the second weight data may have been generated by training a first neural network and a second neural network together.

In this case, at least one of the tags may indicate that the streaming data should be streamed using a pre-process network and a post-process network that have been trained together. Alternatively, or in addition, when there is a limited, or even no, match between the received tags and the tags associated with the sets of weights stored by the storage unit 520 as described elsewhere herein, one of the default set of weights described elsewhere herein may be a set of weights comprising a first portion of weights and a second portion of weights that are generated by training a first neural network and a second neural network together.

In some embodiments of the present disclosure, the reception unit 510 may be configured to receive one or more device properties representative of one or more properties of a neural coding reception device of the neural coding system. In these embodiments, the identification unit 530 may configured to identify, from the storage unit, the set of weights in dependence upon the received tags and the one or more received device properties.

For example, some types of neural coding reception devices may have more capabilities than other types. In a case where the data to be streamed is video game data, coding reception devices with certain capabilities, which may be indicated by the device properties, may participate in the rendering of the video game, which may result in different data to be streamed in comparison to a reception device that does not participate in the rendering. Therefore, it may be more optimal to use a different set of weights in dependence upon the properties of the reception device. Accordingly, the management device 500 may further tailor the weights to be transmitted in dependence upon the properties of the reception device.

As another example, if a reception device has processing power below a predetermined threshold, it may be more efficient to use a smaller neural network for that reception device. Therefore, the identification unit 540 may identify a lighter set of weights for at least the second neural network and, optionally, also the first neural network.

In some embodiments of the present disclosure, the respective weight data may be indicative of the difference between the weights previously transmitted for the respective neural network and the weights in the respective portion of the identified set of weights. In these embodiments, the transmission unit 540 may therefore transmit the changes to the weights for a neural network instead of transmitting an entirely new set of weights. This may advantageously reduce the required bandwidth, especially in a case where the weights are frequently updated.

In some embodiments of the present disclose, the neural coding system to which the weight data is transmitted to may, optionally, store one or more sets of weights. In this case, the respective weight data may simply indicate which of the stored sets of weights to use. In some cases, one or more of the sets of weights stored by the neural coding system may be predefined. Therefore, the sets of weights stored by the neural coding system may be known by the management device 500.

Alternatively, or in addition, one or more of the sets of weights stored by the neural coding system may be one or more sets of weights that have been previously used by the neural coding system (e.g. they may have been stored by the neural coding system from a previous streaming session).

In this case, one or more of the tags received by the management device 500 may be indicative of the sets of weights stored by the neural coding system. These tags may be, but are not necessarily, used by the identification unit 530 when identifying a set of weights. Alternatively, or in addition, these tags may be used to identify a format for the respective weight data after a set of weights has been identified by the identification unit 530.

For example, if these tags indicate that the identified set of weights are already stored by the neural coding system, an indication of the identified set of weights may be identified as the format for the respective weight data may this case. As another example, if these tags indicate that the identified set of weights are not stored by the neural coding system, a portion of the set of weights; the difference between the weights previously transmitted for the respective neural network and the weights in the respective portion of the identified set of weights; or the difference between a set of weights stored by the neural coding system (which may be indicated by at least one of the tags) and the weights in the respective portion of the identified set of weights may be identified as the format for the respective weight data.

In some embodiments of the present disclosure, the storage unit 520 may be configured to store a plurality of quantisation tables for a codec. A respective quantisation table may be associated with at least one tag indicative of a type of streaming data as described elsewhere herein. In these cases, the identification unit 530 may be configured to identify, from the storage unit 520, a quantisation table in dependence upon the received tags. The transmission unit 540 may be configured to transmit, to the neural coding system, for an encoding unit of the neural coding system, at least a portion of the identified quantisation table. The transmission unit 540 may be configured to transmit, to the neural coding system, for a decoding unit of the neural coding system, at least another portion of the identified quantisation table.

Therefore, the management device 500 may enable the encoder/decoder of the neural coding system to use tailored quantisation tables for a given type of data to be streamed in addition to the tailored neural network weights. This may further improve coding performance.

Referring now to figure 6, in some embodiments of the present disclosure, a neural coding transmission device 600 for streaming transmission is provided. The neural coding transmission device 600 comprises an identification unit 610; a transmission unit 620; a reception unit 630; a weight modification unit 640; a pre-processing unit 650; and an encoding unit 660.

The identification unit 610 is configured to identify one or more tags indicative of a type of streaming data to be streamed by the neural coding transmission device. For example, the streaming data may be associated with metadata that is indicative of the type of streaming data, and the identification unit 610 may identify the one or more tags in dependence upon the associated metadata. As another example, the identification unit 610 may, alternatively or additionally, be configured to identify of the type of streaming data based on one or more properties of the streaming data, and identify the one or more tags in dependence upon the identified properties. Any other technique suitable for the identification unit 610 to identify the one or more tags may alternatively or additionally be used.

The transmission unit 620 is configured to transmit, to a management device (such as the management device 190 or 500), the one or more identified tags.

The reception unit 630 is configured to receive, from the management device, first weight data representative of weights for a first neural network.

The weight modification unit 640 is configured to modify the weights of the first neural network in dependence upon the first weight data received by the reception unit. As described elsewhere herein, weight data may be indicative of the changes to the weights of the first neural network or may be indicative of a set of weights for the first neural network. Therefore, the weight modification unit 640 may modify the weights of the first neural network by updating the weights of the first neural network in dependence upon on weight data indicative of the changes to the weights of the first neural network or may set the weights of the first neural network to the weights indicated by weight data in dependence upon the weight data being indicative of a set of weights for the first neural network.

The pre-processing unit 650 is configured to pre-process, using the first neural network, the streaming data to obtain pre-processed data. The encoding unit 560 is configured to encode, using a real codec, the pre-processed data in accordance with the techniques described elsewhere herein.

The transmission unit 620 is configured to stream, to a neural coding reception device for streaming reception, the encoded pre-processed data.

Referring now to figure 7, in some embodiments of the present disclosure, a neural coding reception device 700 for receiving streamed data is provided. The neural coding reception device 700 comprises a reception unit 710; a weight modification unit 720 configured to modify the weights of the second neural network in dependence upon the second weight data received by the reception unit; a decoding unit 730; and a post-processing unit 740.

The reception unit 710 is configured to receive, from a management device (such as the management device 190 or 500), second weight data representative of weights for a second neural network. The reception unit 710 is also configured to receive, from a neural coding transmission device (such as the neural coding transmission device 600) for streaming transmission, encoded pre-processed streamed data.

The weight modification unit 720 is configured to modify the weights of the second neural network in dependence upon the second weight data received by the reception unit 710.

The decoding unit 730 is configured to decode, using a real codec, the encoded pre-processed streamed data to obtain decoded pre-processed streamed data. The post-processing unit 740 is configured to post-process, using the second neural network, the decoded pre-processed streamed data to obtain a reconstruction of the streamed data as described elsewhere herein.

In some embodiments of the present disclosure, the neural coding reception device 700 may further comprise a transmission unit 750 configured to transmit, to the management device, one or more device properties of the neural coding reception device 700 in accordance with the techniques described elsewhere herein.

In some embodiments of the present disclosure, a neural coding system for streaming is provided. The neural coding system for streaming comprises the management device 500; the neural coding transmission device 600; and the neural coding reception device 700.

Optionally, in any of the embodiments of the neural coding system described herein, the neural coding system may further comprise a splitting unit 170; and a composing unit 180, which are illustrated in the example neural coding system 100 of figure 1.

The splitting unit 170 may be configured to split the streaming data 102, prior to the streaming data being pre-processed by the pre-processing unit 110, into a plurality of streaming data content components in dependence upon the content in the streaming data. For example, if the streaming data 102 is video game data, the content of the streaming data 102 may comprise a graphical user interface (GUI) that is overlaid over the main content. In this example, the splitting unit may split the streaming data 102 into a GUI streaming data content component and a main content streaming data content component.

A respective streaming data content component may be streamed by the neural coding system independently of the other streaming data content components to obtain a respective reconstruction of the respective streaming data content component. Therefore, referring to the above example, the GUI streaming data content component and the main content streaming data content component may be streamed by the neural coding system independently of one another. Furthermore, prior to the pre-processing one or more of the streaming data content components may be scaled from one resolution to another resolution.

In these embodiments of the present disclosure, the composing unit 180 may be configured to combine the plurality of reconstructions of respective streaming data content components for output by the neural coding system. Referring again to the above example, a reconstruction of the GUI streaming data content component and a reconstruction of the main content streaming data content component may be combined by the composing unit 180 prior to output by the neural coding system.

Optionally, in any of the embodiments of the neural coding system described herein, at least a portion of the streaming data may be in a format not supported by the real codec. In these cases, the first neural network may trained to convert, during the pre-processing, the portion of the streaming data into latent data 118 that is in a format that is supported by the real codec. Additionally, the second neural network may be trained to convert, during the post-processing, the decoded latent data, comprised by the decoded pre-processed data, into a reconstruction of the portion of the streaming data that is in the format not supported by the real codec.

Further optionally, in cases where the neural coding system comprises a management device (such as the management device 190 or 500), at least one of the one or more tags received by the management device may be indicative of the portion of the streaming data in the format not supported by the real codec. Therefore, the weights supplied to the neural networks may be further tailored to enable the neural networks to convert the portion of the streaming data to/from the latent data 118.

Referring now to figure 8, a method 800 for managing a neural coding system is provided. The method comprises the steps of receiving 810 one or more tags indicative of a type of streaming data to be streamed by the neural coding system; storing 820 a plurality of sets of weights for neural networks of the neural coding system, wherein a respective set of weights is associated with at least one tag indicative of a type of streaming data; identifying 830, from the storage unit, a set of weights in dependence upon the received tags; transmitting 840, to the neural coding system, for a first neural network of the neural coding system, first weight data representative of a portion of the identified set of weights; and transmitting 850, to the neural coding system, for a second neural network of the neural coding system, a second weight data representative of another portion of the identified set of weights.

In some embodiments of the present disclosure, a non-transitory machine-readable storage medium which stores a hybrid codec 210 is provided. The hybrid codec 210 has been described elsewhere herein.

In some embodiments of the present disclosure, a computer program is provided. The computer program comprising computer executable instructions adapted to cause a computer system to perform any of the methods described elsewhere herein.

It will be appreciated that the above methods may be carried out on conventional hardware suitably adapted as applicable by software instruction or by the inclusion or substitution of dedicated hardware.

Thus the required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

Example(s) of the present technology are defined by the following numbered clauses:
1. A hybrid codec for training a neural coding system, the hybrid codec comprising:
   a real codec for encoding data pre-processed by a first neural network, and for decoding the encoded data for post-processing by a second neural network; and
   a proxy codec that is a differentiable representation of the real codec, and is for back-propagating a loss function, representative of a coding bit-rate of the real codec and a coding distortion between the post-processed data and the original data, for training the weights of at least the first neural network.
2. A neural coding system for streaming, the neural coding system comprising:
   a pre-processing unit configured to pre-process streaming data to obtain pre-processed data using a first neural network trained to pre-process streaming data;
   the hybrid codec of clause 1;
   an encoding unit configured to encode, using the real codec, the pre-processed data;
   a decoding unit configured to decode, using the real codec, the encoded pre-processed data; and
   a post-processing unit configured to post-process the decoded pre-processed data to obtain a reconstruction of the streaming data using a second neural network trained to post-process the decoded pre-processed data.
3. The neural coding system according to clause 2, comprising:
   a loss calculation unit configured to calculate a loss function representative of a coding bit-rate for the streaming data and a coding distortion between the streaming data and the reconstruction of the streaming data; and
   a backpropagation unit configured to further train the weights of the first neural network by back-propagating the loss function using the proxy codec that is a differentiable representation of the real codec.
4. The neural coding system according to clause 3, wherein the backpropagation unit is configured to further train the weights of the second neural network by back-propagating the loss function via the second neural network prior to the backpropagation of the loss function using the proxy codec.
5. The neural coding system according to any one of clauses 2-4, comprising:
   a training repository unit configured to store the streaming data for further training the first neural network and the second neural network.
6. The neural coding system according to clause 5, wherein the training repository unit is configured to store the reconstruction of the streaming data in association with the streaming data for further training the first neural network and the second neural network.
7. The neural coding system according to any one of clauses 5 and 6 when dependent upon any one of clauses 3 and 4, in which the backpropagation unit is configured to further train the weights when a utilisation level of the neural coding system is below a predetermined threshold.
8. The neural coding system according to any one or clauses 5-7, further comprising:
   a filter unit configured to filter the data to be stored in the training repository unit using a third neural network trained to identify the data most likely to improve the first neural network and the second neural network when further trained.
9. A method for streaming using neural coding with the hybrid codec of clause 1, the method comprising the steps of:
   pre-processing streaming data to obtain pre-processed data using a first neural network trained to pre-process the streaming data;
   encoding, using the real codec, the pre-processed data;
   decoding, using the real codec, the encoded pre-processed data; and
   post-processing the decoded pre-processed data to obtain a reconstruction of the streaming data using a second neural network trained to post-process the decoded pre-processed data.
10. A method for training the first neural network according to clause 9, the method comprising the steps of:
   calculating a loss function representative of a coding bit-rate for streaming data coded in accordance with the method of clause 9 and a coding distortion between the streaming data and the reconstruction of the streaming data obtained in accordance with the method of clause 9; and
   further training the weights of the first neural network by back-propagating the loss function using the proxy codec.
11. A management device for a neural coding streaming system, the management device comprising:
   a reception unit configured to receive one or more tags indicative of a type of streaming data to be streamed by the neural coding system;
   a storage unit configured to store a plurality of sets of weights for neural networks of the neural coding system, wherein a respective set of weights is associated with at least one tag indicative of a type of streaming data;
   an identification unit configured to identify, from the storage unit, a set of weights in dependence upon the received tags; and
   a transmission unit configured to transmit, to the neural coding system, for a first neural network of the neural coding system, first weight data representative of a portion of the identified set of weights, and to transmit, to the neural coding system, for a second neural network of the neural coding system, second weight data representative of another portion of the identified set of weights.
12. The management device according to clause 11, wherein
   the reception unit is configured to receive one or more device properties representative of one or more properties of a neural coding reception device of the neural coding system; and
   the identification unit is configured to identify, from the storage unit, the set of weights in dependence upon the received tags upon the one or more received device properties.
13. The management device according to any one of clauses 11 and 12, wherein the respective weight data is indicative of the difference between the weights previously transmitted for the respective neural network and the weights in the respective portion of the identified set of weights.
14. The management device according to any one of clauses 11-13, wherein
   the storage unit is configured to store a plurality of quantisation tables for a codec, wherein a respective quantisation table is associated with at least one tag indicative of a type of streaming data;
   the identification unit is configured to identify, from the storage unit, a quantisation table in dependence upon the received tags; and
   the transmission unit is configured to transmit, to the neural coding system, for an encoding unit of the neural coding system, at least a portion of the identified quantisation table, and to transmit, to the neural coding system, for a decoding unit of the neural coding system, at least another portion of the identified quantisation table.
15. A neural coding transmission device for streaming transmission, the neural coding transmission device comprising:
   an identification unit configured to identify one or more tags indicative of a type of streaming data to be streamed by the neural coding transmission device;
   a transmission unit configured to transmit, to a management device, the one or more identified tags;
   a reception unit configured to receive, from the management device, first weight data representative of weights for a first neural network;
   a weight modification unit configured to modify the weights of the first neural network in dependence upon the first weight data received by the reception unit;
   a pre-processing unit configured to pre-process, using the first neural network, the streaming data to obtain pre-processed data;
   an encoding unit configured to encode, using a real codec, the pre-processed data; and
   the transmission unit is configured to stream, to a neural coding reception device for streaming reception, the encoded pre-processed data.
16. A neural coding reception device for receiving streamed data, the neural coding reception device comprising:
   a reception unit configured to receive, from a management device, second weight data representative of weights for a second neural network;
   a weight modification unit configured to modify the weights of the second neural network in dependence upon the second weight data received by the reception unit;
   the reception unit is configured to receive, from a neural coding transmission device for streaming transmission, encoded pre-processed streamed data;
   a decoding unit configured to decode, using a real codec, the encoded pre-processed streamed data to obtain decoded pre-processed streamed data; and
   a post-processing unit configured to post-process, using the second neural network, the decoded pre-processed streamed data to obtain a reconstruction of the streamed data.
17. The neural coding reception device according to clause 16, further comprising:
   a transmission unit configured to transmit, to the management device, one or more device properties of the neural coding reception device.
18. A neural coding system for streaming comprising:
   the management device according to any one of clauses 11-14;
   the neural coding transmission device according to clause 15; and
   the neural coding reception device according to any one of clauses 16-17.
19. A method for managing a neural coding system, the method comprising the steps of:
   receiving one or more tags indicative of a type of streaming data to be streamed by the neural coding system;
   storing a plurality of sets of weights for neural networks of the neural coding system, wherein a respective set of weights is associated with at least one tag indicative of a type of streaming data;
   identifying, from the storage unit, a set of weights in dependence upon the received tags;
   transmitting, to the neural coding system, for a first neural network of the neural coding system, first weight data representative of a portion of the identified set of weights; and
   transmitting, to the neural coding system, for a second neural network of the neural coding system, second weight data representative of another portion of the identified set of weights.
20. The neural coding system according to any one of clauses 2-8 and 18, comprising:
   a splitting unit configured to split the streaming data, prior to the streaming data being pre-processed by the pre-processing unit, into a plurality of streaming data content components in dependence upon the content in the streaming data, wherein
   a respective streaming data content component is streamed by the neural coding system independently of the other streaming data content components to obtain a respective reconstruction of the respective streaming data content component; and
   a composing unit configured to combine the plurality of reconstructions of respective streaming data content components for output by the neural coding system.
21. The neural coding system according to any one of clauses 2-8, 18 and 20, wherein
   a portion of the streaming data is in a format not supported by the real codec;
   the first neural network is trained to convert, during the pre-processing, the portion of the streaming data into latent data that is in a format that is supported by the real codec; and
   the second neural network is trained to convert, during the post-processing, the decoded latent data, comprised by the decoded pre-processed data, into a reconstruction of the portion of the streaming data that is in the format not supported by the real codec.
22. The neural coding system according to clause 21 when dependent upon clause 18, wherein at least one of the one or more tags received by the management device are indicative of the portion of the streaming data in the format not supported by the real codec.
23. A non-transitory machine-readable storage medium which stores a hybrid codec according to clause 1.
24. Computer software which, when executed by a computer, causes the computer to carry out the methods of any one of clauses 9, 10 and 19.
25. A non-transitory machine-readable storage medium which stores computer software according to clause 24.

## Claims

1. A hybrid codec for training a neural coding system, the hybrid codec comprising:
a real codec for encoding data pre-processed by a first neural network, and for decoding the encoded data for post-processing by a second neural network; and
a proxy codec that is a differentiable representation of the real codec, and is for back-propagating a loss function, representative of a coding bit-rate of the real codec and a coding distortion between the post-processed data and the original data, for training the weights of at least the first neural network.

2. A neural coding system for streaming, the neural coding system comprising:
a pre-processing unit configured to pre-process streaming data to obtain pre-processed data using a first neural network trained to pre-process streaming data;
the hybrid codec of claim 1;
an encoding unit configured to encode, using the real codec, the pre-processed data;
a decoding unit configured to decode, using the real codec, the encoded pre-processed data; and
a post-processing unit configured to post-process the decoded pre-processed data to obtain a reconstruction of the streaming data using a second neural network trained to post-process the decoded pre-processed data.

3. The neural coding system according to claim 2, comprising:
a loss calculation unit configured to calculate a loss function representative of a coding bit-rate for the streaming data and a coding distortion between the streaming data and the reconstruction of the streaming data; and
a backpropagation unit configured to further train the weights of the first neural network by back-propagating the loss function using the proxy codec that is a differentiable representation of the real codec.

4. The neural coding system according to claim 3, wherein the backpropagation unit is configured to further train the weights of the second neural network by back-propagating the loss function via the second neural network prior to the backpropagation of the loss function using the proxy codec.

5. The neural coding system according to any one of claims 2-4, comprising:
a training repository unit configured to store the streaming data for further training the first neural network and the second neural network.

6. The neural coding system according to claim 5, wherein the training repository unit is configured to store the reconstruction of the streaming data in association with the streaming data for further training the first neural network and the second neural network.

7. The neural coding system according to any one of claims 5 and 6 when dependent upon any one of claims 3 and 4, in which the backpropagation unit is configured to further train the weights when a utilisation level of the neural coding system is below a predetermined threshold.

8. The neural coding system according to any one or claims 5-7, further comprising:
a filter unit configured to filter the data to be stored in the training repository unit using a third neural network trained to identify the data most likely to improve the first neural network and the second neural network when further trained.

9. The neural coding system according to any one of claims 2-8, comprising:
a splitting unit configured to split the streaming data, prior to the streaming data being pre-processed by the pre-processing unit, into a plurality of streaming data content components in dependence upon the content in the streaming data, wherein
a respective streaming data content component is streamed by the neural coding system independently of the other streaming data content components to obtain a respective reconstruction of the respective streaming data content component; and
a composing unit configured to combine the plurality of reconstructions of respective streaming data content components for output by the neural coding system.

10. The neural coding system according to any one of claims 2-9, wherein
a portion of the streaming data is in a format not supported by the real codec;
the first neural network is trained to convert, during the pre-processing, the portion of the streaming data into latent data that is in a format that is supported by the real codec; and
the second neural network is trained to convert, during the post-processing, the decoded latent data, comprised by the decoded pre-processed data, into a reconstruction of the portion of the streaming data that is in the format not supported by the real codec.

11. A method for streaming using neural coding with the hybrid codec of claim 1, the method comprising the steps of:
pre-processing streaming data to obtain pre-processed data using a first neural network trained to pre-process the streaming data;
encoding, using the real codec, the pre-processed data;
decoding, using the real codec, the encoded pre-processed data; and
post-processing the decoded pre-processed data to obtain a reconstruction of the streaming data using a second neural network trained to post-process the decoded pre-processed data.

12. A method for training the first neural network according to claim 11, the method comprising the steps of:
calculating a loss function representative of a coding bit-rate for streaming data coded in accordance with the method of claim 9 and a coding distortion between the streaming data and the reconstruction of the streaming data obtained in accordance with the method of claim 9; and
further training the weights of the first neural network by back-propagating the loss function using the proxy codec.

13. A non-transitory machine-readable storage medium which stores a hybrid codec according to claim 1.

14. Computer software which, when executed by a computer, causes the computer to carry out the methods of any one of claims 11-12.

15. A non-transitory machine-readable storage medium which stores computer software according to claim 14.
